# EUROPEAN PATENT SPECIFICATION

(11) **EP 3 557 476 B1**
(45) Date of publication and mention of the grant of the patent: **09.08.2023**
(21) Application number: 18167677.6
(22) Date of filing: 17.04.2018
(51) Int. Cl.: G06V 10/82, G06V 20/58

(54) **DEVICE FOR DETERMINING A CAPTION FOR AN UNKNOWN TRAFFIC SIGN**
VORRICHTUNG ZUR BESTIMMUNG EINER BESCHRIFTUNG FÜR EIN UNBEKANNTES VERKEHRSZEICHEN
DISPOSITIF DE DÉTERMINATION D'UNE LÉGENDE POUR UN PANNEAU DE SIGNALISATION INCONNU

(43) Date of publication of application: 23.10.2019
(73) Proprietor: Continental Autonomous Mobility Germany GmbH, 85057 Ingolstadt (DE)
(72) Inventor: Antony, Jerin, 688528 Alappuzha (IN); Kizhiyedath, Sreejith, 560037 Bangalore (IN); Ramachandran, Radhika, 683574 Ernakulam (IN)
(74) Representative: Continental Corporation

(56) References cited:
- KELVIN XU ET AL: "Show, Attend and Tell: Neural Image Caption Generation with Visual Attention", CORR (ARXIV), vol. 1502.03044, no. 1502.03044v2, 11 February 2015 (2015-02-11), pages 1-22, XP055370931,
- YANN LECUN ET AL: "Deep learning", NATURE, vol. 521, no. 7553, 27 May 2015 (2015-05-27), pages 436-444, XP055262383, GB ISSN: 0028-0836, DOI: 10.1038/nature14539
- RONG XUEJIAN ET AL: "Recognizing Text-Based Traffic Guide Panels with Cascaded Localization Network", 18 September 2016 (2016-09-18), MEDICAL IMAGE COMPUTING AND COMPUTER-ASSISTED INTERVENTION - MICCAI 2015 : 18TH INTERNATIONAL CONFERENCE, MUNICH, GERMANY, OCTOBER 5-9, 2015; PROCEEDINGS; [LECTURE NOTES IN COMPUTER SCIENCE; LECT.NOTES COMPUTER], SPRINGER INTERNATIONAL PUBLISHING, CH, XP047354232, ISSN: 0302-9743 ISBN: 978-3-319-24946-9 [retrieved on 2016-09-18] * Section 4 * * *
- Kai Yi ET AL: "Knowledge-based Recurrent Attentive Neural Network for Small Object Detection", , 15 March 2018 (2018-03-15), XP55515506, Retrieved from the Internet: URL:https://arxiv.org/pdf/1803.05263v2.pdf [retrieved on 2018-10-15]
- PICCIOLI G ET AL: "Robust method for road sign detection and recognition", IMAGE AND VISION COMPUTING, ELSEVIER, GUILDFORD, GB, vol. 14, no. 3, 1 April 1996 (1996-04-01), pages 209-223, XP002252733, ISSN: 0262-8856, DOI: 10.1016/0262-8856(95)01057-2
- RUTA A ET AL: "Real-time traffic sign recognition from video by class-specific discriminative features", PATTERN RECOGNITION, ELSEVIER, GB, vol. 43, no. 1, 1 January 2010 (2010-01-01), pages 416-430, XP026498180, ISSN: 0031-3203, DOI: 10.1016/J.PATCOG.2009.05.018 [retrieved on 2009-06-06]
- Geng Yan ET AL: "LSTM for Image Annotation with Relative Visual Importance", Proceedings of the British Machine Vision Conference (BMVC), 19-22 September, 2016, York, UK, 1 January 2016 (2016-01-01), pages 78.1-78.11, XP055738399, UK DOI: 10.5244/C.30.78 ISBN: 978-1-901725-59-9
- Jeff Donahue ET AL: "Long-term Recurrent Convolutional Networks for Visual Recognition and Description", CALIFORNIA UNIV BERKELEY ELEC ENG COMP SCI DEPT, 31 May 2016 (2016-05-31), XP055694259, Fort Belvoir, VA DOI: 10.21236/ADA623249 Retrieved from the Internet: URL:https://arxiv.org/pdf/1411.4389.pdf [retrieved on 2020-05-12]
- KARPATHY ANDREJ ET AL: "Deep visual-semantic alignments for generating image descriptions", 2015 IEEE CONFERENCE ON COMPUTER VISION AND PATTERN RECOGNITION (CVPR), IEEE, 7 June 2015 (2015-06-07), pages 3128-3137, XP032793761, DOI: 10.1109/CVPR.2015.7298932 [retrieved on 2015-10-14]

## Description

### FIELD OF THE INVENTION

The present invention relates to an advanced driving assistance system, a vehicle with an advanced driving assistance system, and to a method for determining a caption for an unknown traffic sign, as well as to a computer program element and a computer readable medium.

### BACKGROUND OF THE INVENTION

The general background of this invention is the field of traffic sign recognition. Traffic sign recognition systems require very large databases of traffic sign imagery against which a currently acquired image of a sign is compared in order to identify it. If the currently acquired sign is not found in the database, the current sign is not identified and is considered to be garbage. Kai Yi ET AL: "Knowledge-based Recurrent Attentive Neural Network for Small Object Detection", published on 15 March 2018, shows method for the detection of the boundaries of small objects like traffic signs based on deep learning techniques like RANN. PICCIOLI G ET AL: "Robust method for road sign detection and recognition",IMAGE AND VISION COMPUTING, ELSEVIER, GUILDFORD, GB, vol. 14, no. 3, 1 April 1996 (1996-04-01), pages 209-223, uses a conventional approach for traffic sign recognition using a detection, tracking, classification approach. The classifier disclosed in this document is trained with offline images of predefined signs and in real time the generated model file is used for recognition of signs. RUTA A ET AL: "Real-time traffic sign recognition from video by class-specific discriminative features", PATTERN RECOGNITION, ELSEVIER, GB, vol. 43, no. 1, 1 January 2010 (2010-01-01), pages 416-430,discloses a trained model for traffic sign recognition with a detection based in geometric features and class specific classifiers.

There is a need to provide an improved technique for recognizing traffic signs.

### SUMMARY OF THE INVENTION

The object of the present invention is solved with the subject matter of the independent claims, wherein further embodiments are incorporated in the dependent claims. It should be noted that the following described aspects and examples of the invention apply for the advanced driving assistance system, for the vehicle with an advanced driving assistance system, for the method for determining a caption for an unknown traffic sign, and for the computer program element and computer readable medium.

There is provided an advanced driving assistance system, comprising:
- at least one camera; and
- a device for determining a caption for an unknown traffic sign according to the first aspect.

The at least one camera is configured to acquire at least one image comprising the at least one image data.

The advanced driving assistance system comprises a traffic sign classifier. The traffic sign classifier is provided with at least one image comprising the at least one image data. The traffic sign classifier is configured to analyse the at least one image to determine if a detected traffic sign is known or unknown. If the traffic sign is unknown the classifier is configured to provide the at least one image data relating to the unknown traffic sign to the processing unit of the device.

Thus, a first classifier operates to identify signs such as speed limit signs, roundabout signs, and other signs that it can identify. However, with respect to signs that it cannot identify and as such are unknown to it, these can be passed to a second classifier that utilises the at least one trained neural network to provide a caption for this unknown sign, thereby identifying it.

According to a second aspect, there is provided a vehicle with an advanced driving assistance system according to the second aspect. The output unit of the device is configured to display the caption for the unknown traffic sign on a dashboard display of the vehicle.

According to a third aspect, there is provided a method for determining a caption for an unknown traffic sign, comprising:
a) providing a processing unit with image data relating to an unknown traffic sign for which a caption associated with the traffic sign is not known;
b) implementing by the processing unit at least one artificial neural network to process the image data to generate a caption for the unknown traffic sign; wherein the at least one artificial neural network has been trained on the basis of a plurality of image data and associated captions for a plurality of known traffic signs, wherein the caption for each known traffic sign is known; and
c) outputting (330) by an output unit the caption for the unknown traffic sign.

According to another aspect, there is provided a computer program element controlling apparatus as previously described which, when the computer program element is executed by a processing unit, is adapted to perform the method steps as previously described.

According to another aspect, there is also provided a computer readable medium having stored the computer element as previously described.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of a device (not claimed)
   for determining a caption for an unknown traffic sign;
Fig. 2 shows a schematic set up of an example of an advanced driving assistance system;
Fig. 3 shows a schematic set up of an example of a vehicle with advanced driving assistance system;
Fig. 4 shows a method for determining a caption for an unknown traffic sign;
Fig. 5 shows an example of signs used to train a CNN and RNN (LSTM) network;
Fig. 6 shows an example of an unknown sign;
Fig. 7 shows a detailed example of a complete sign recognition system that includes a CNN and RNN (LSTM) network used in determining a caption for an unknown traffic sign; and
Fig 8 shows greater detail of the CNN and RNN (LSTM) network as shown in Fig. 7.

### DETAILED DESCRIPTION OF EMBODIMENTS

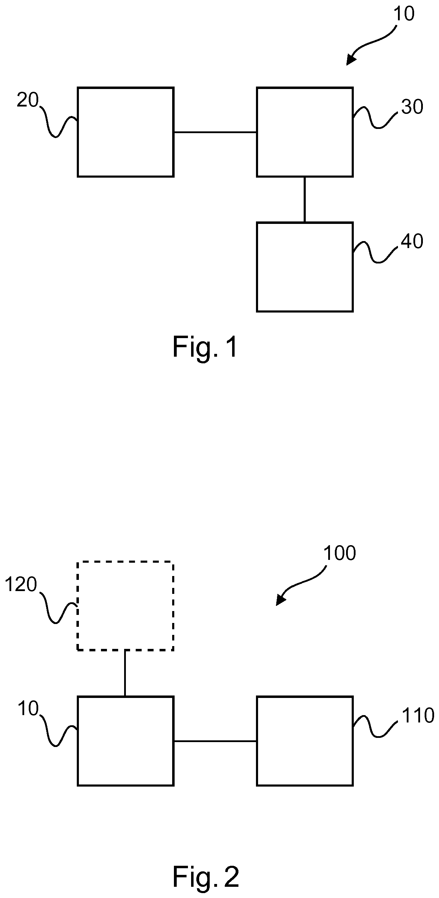

Fig. 1 shows an example of a (not claimed) device 10 for determining a caption for an unknown traffic sign. The device 10 comprises an input unit 20, a processing unit 30, and an output unit 40. The input unit 20 is configured to provide the processing unit 30 with at least one image data relating to an unknown traffic sign for which a caption associated with the traffic sign is not known. The processing unit 30 is configured to implement at least one artificial neural network to process the at least one image data to generate a caption for the unknown traffic sign. The at least one artificial neural network has been trained on the basis of a plurality of image data and associated captions for a plurality of known traffic signs. The caption for each known traffic sign used in the training is known. The output unit 40 is configured to output the caption for the unknown traffic sign.

According to a not claimed example, the at least one image data is a plurality of image data. The processing unit is configured to generate a plurality of intermediate captions for the plurality of image data. Each image data has an associated generated intermediate caption. Generation of the caption for the unknown traffic sign comprises utilisation of the plurality of intermediate captions.

The processing unit is configured to generate a plurality of probability scores for the plurality of intermediate captions. Each intermediate caption has an associated probability score indicating a likelihood that the intermediate caption is the correct caption for the unknown traffic sign. Generation of the caption for the unknown traffic sign comprises utilisation of the plurality of probability scores.

The processing unit is configured to sum together the probability scores for the intermediate captions that have the same caption. Generation of the caption for the unknown traffic sign comprises utilisation of the intermediate caption that has the highest sum of probability scores.

The at least one artificial neural network comprises a convolutional neural network "CNN" and a recurrent neural network "RNN".

The output from the CNN forms input to the RNN.

The RNN is a Long Short Term Memory "LSTM" neural network.

The training of the at least one neural network comprises a simultaneous optimization step where of weights of the CNN and RNN are adjusted together.

After generation of the caption for the unknown traffic sign the unknown traffic sign becomes a known traffic sign. The at least one artificial neural network is further trained comprising utilization of the generated caption and the at least one image data for the previously unknown traffic sign that is now a known traffic sign.

Fig. 2 shows an example of an advanced driving assistance system (ADAS) 100. The ADAS 100 comprises at least one camera 110 and a device 10 for determining a caption for an unknown traffic sign according as described with respect to Fig. 1. The at least one camera 110 is configured to acquire at least one image comprising the at least one image data.

The advanced driving assistance system 100 comprises a traffic sign classifier 120. The traffic sign classifier 120 is provided with at least one image comprising the at least one image data. The traffic sign classifier 120 is configured to analyse the at least one image to determine if a detected traffic sign is known or unknown and if the traffic sign is unknown the classifier is configured to provide the at least one image data relating to the unknown traffic sign to the processing unit 30 of the device 10.

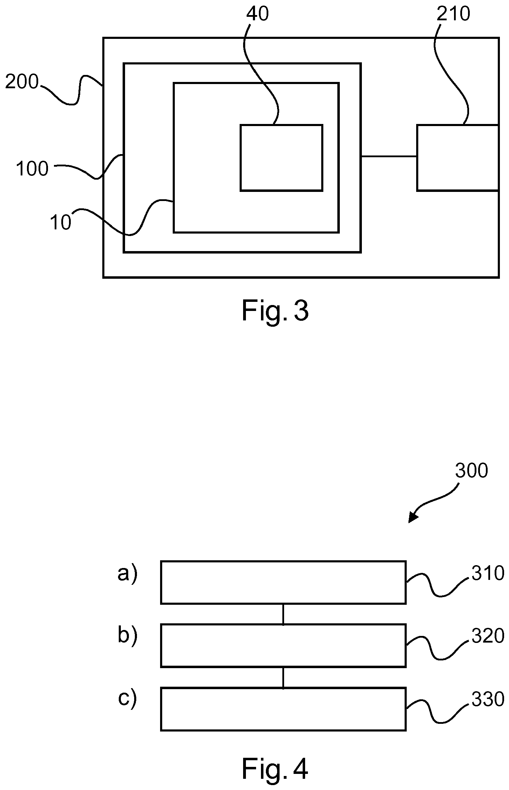

Fig. 3 shows an example of a vehicle 200 with an advanced driving assistance system 100 as described with respect to Fig. 2. The output unit 40 of the device 10 is configured to display the caption for the unknown traffic sign on a dashboard display 210 of the vehicle 200.

Fig. 4 shows a method 300 for determining a caption for an unknown traffic sign in its basic steps. the method 300 comprises:
in a providing step 310, also referred to as step a), providing a processing unit with at least one image data relating to an unknown traffic sign for which a caption associated with the traffic sign is not known;
in an implementing step 320, also referred to as step b), implementing by the processing unit at least one artificial neural network to process the at least one image data to generate a caption for the unknown traffic sign. The at least one artificial neural network has been trained on the basis of a plurality of image data and associated captions for a plurality of known traffic signs, wherein for the training of the at least one neural network the caption for each known traffic sign is known; and
in an outputting step 330, also referred to as step c), outputting by an output unit the caption for the unknown traffic sign.

The image data is a plurality of image data, and wherein step b) comprises the processing unit generating a plurality of intermediate captions for the plurality of image data, wherein each image data has an associated generated intermediate caption. Generation of the caption for the unknown traffic sign comprises utilisation of the plurality of intermediate captions.

The step b) comprises the processing unit generating a plurality of probability scores for the plurality of intermediate captions. each intermediate caption has an associated probability score indicating a likelihood that the intermediate caption is the correct caption for the unknown traffic sign. Generation of the caption for the unknown traffic sign comprises utilisation of the plurality of probability scores.

The step b) comprises the processing unit summing together the probability scores for the intermediate captions that have the same caption. Generation of the caption for the unknown traffic sign comprises utilisation of the intermediate caption that has the highest sum of probability scores.

In step b) the at least one artificial neural network comprises a convolutional neural network "CNN" and a recurrent neural network "RNN".

The output from the CNN forms input to the RNN.

The RNN is a Long Short Term Memory "LSTM" neural network.

The training of the at least one neural network comprises a simultaneous optimization step where of weights of the CNN and RNN are adjusted together.

After generation of the caption for the unknown traffic sign the unknown traffic sign becomes a known traffic sign. The at least one artificial neural network is further trained comprising utilization of the generated caption and the at least one image data for the previously unknown traffic sign that is now a known traffic sign.

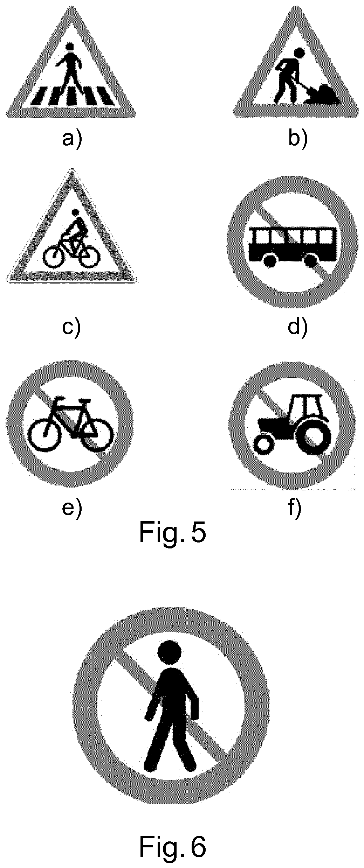

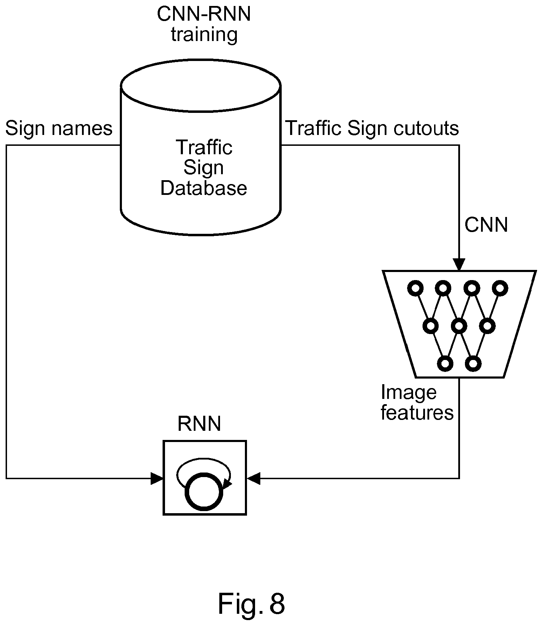

The advanced driving assistance system, vehicle and method are now described in further detail with respect to Figs. 5-8.

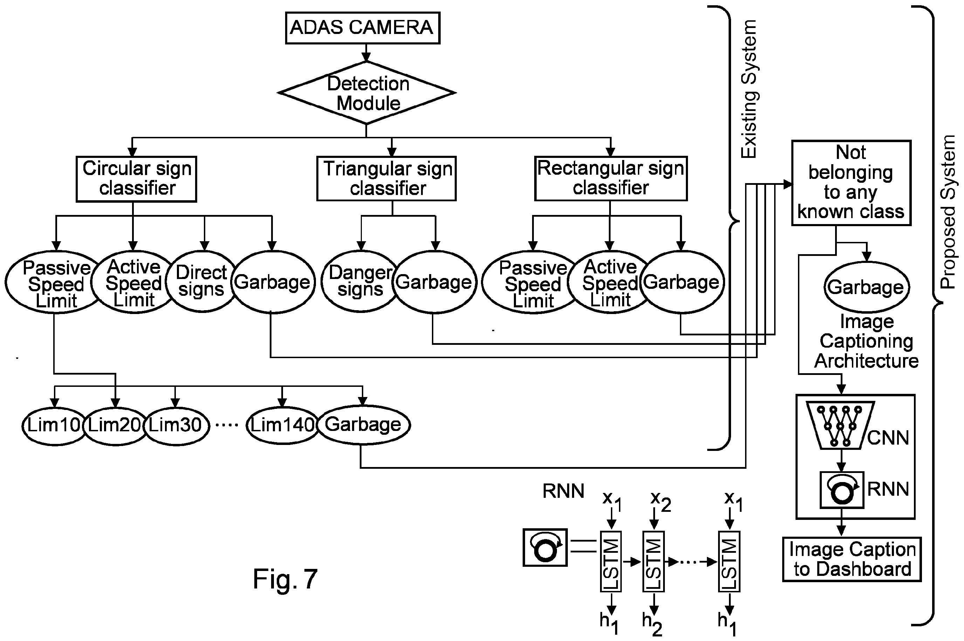

Fig. 5 shows a number of different traffic signs used in training a CNN and RNN (LSTM) network, shown in more detail in Figs. 7-8. These images shown sign cutouts, and these are provided to the CNN and RNN (LSTM) network, along with the associated captions. Thus, for Fig. 5a, the sign cut-out and caption "Person Zebra Crossing" is provided as training input. For Fig, 5b the sign cut-out and "Person Working on Road" is provided. For Fig. 5c, the sign cut-out and "Person on Bicycle" is provided. For Fig. 5d, the sign cut-out and "Bus Prohibited" is provided. For Fig 5e, the sign cut-out and "Cycle Prohibited" is provided. For Fig. 5f, the sign cut-out and "Tractor Prohibited" is provided. Many other sign cut-outs with associated captions can be provided as training data to the CNN and RNN (LSTM) network, and these are only examples.

Regarding training of the CNN and RNN (LSTM) network, taking for example Fig. 5a, relating to a sign cut-out of a person walking on a zebra crossing and the associated caption "Person Zebra Crossing". As far as the training implementation is considered, the image details of a person and zebra crossing do not need to be separately provided. All that is feed as training input is this pictogram along with the Caption "Person Zebra Crossing". The CNN part of the network is capable of extracting the individual features from it.

Therefore, the input to train the CNN and RNN (LSTM) network is sign cutouts and the corresponding captions. The CNN is responsible for extracting features from the sign cutout that is provided as input to the network. A Deep Convolutional Neural Network (VGG 16) for the CNN model. The network architecture and details of VGG 16 can be found in the paper by K. Simonyan and A. Zisserman "Very Deep Convolutional Networks For Large-Scale Image Recognitiona" conference paper at ICLR 2015, https://arxiv.org/pdf/14 0 9.1556.pdf.

For learning the caption associated with the sign cut-outs, a special kind of RNN known as LSTM (Long Short Term Memory) is used. LSTM is in the form of a chain of repeating modules of neural network. It is based on the concept of persistence of thought that human beings have. For instance when a human reads an essay each word is understood based on the understanding of the previous words. LSTM have loops within them, which allows the words to persist. They can connect the previous information to the present task, which in this analogy would be for predicting the next word in the sentence from the previous words. This is achieved by defining a probability distribution of the next word in a sequence given the current word and context from previous time steps. The architecture and details of LSTM can be found here in the paper by S. Hochreiter and J. Schmidhuber "Long Short-Term Memory" Neural Computation 9 (8): 1735-1780, 1997.

The output features from the CNN is directly connected to the LSTM. The training is performed end to end at a single step of optimization so that the weights of both CNN and LSTM get adjusted in one go. The network weights are therefore learned end to end in a single step of optimization. By the end of training process the network will be capable of predicting the caption for unknown sign cutout based on the features and captions it learned from the ground truth that it is trained with. For instance, in Fig. 5 with the associated captions as discussed above, the network will learn that the Person features from cutouts a, b and c is associated with a label "Person" and that the Diagonal Line across the image in d, e, and f is associated with label "Prohibited".

Therefore, turning to Fig. 6 that shows an unknown traffic sign, when provided with the sign cut-out the CNN and RNN (LSTM) network predicts a caption of "Person Prohibited".

However, with respect to continuous frames of an in-car camera output, the result of the CNN and RNN network may not be the same result for each frame for a particular sign. Therefore, to address this the probability of each result is determined and is accumulated and the final result is the caption with maximum accumulated probability. For example if the input sign is 'Person Prohibited' and Table 1 details the caption result of 5 camera frame results, then Table 2 are provides the accumulated (summed) probabilities from which the final caption result of "Person Prohibited" is output.

**Table 1**

| Frame number | Caption result | Probability |
|---|---|---|
| 1 | Person Prohibited | 0.61 |
| 2 | Cycle Prohibited | 0.36 |
| 3 | Person On Bicycle | 0.41 |
| 4 | Person Prohibited | 0.75 |
| 5 | Person Prohibited | 0.69 |

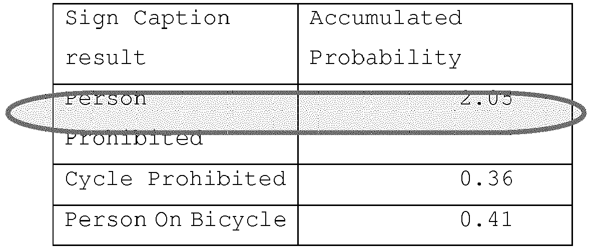

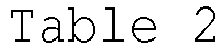

Figs. 7-8 show the complete sign recognition system, that includes the CNN and RNN (LSTM) network that can determine a caption for an unknown traffic sign as discussed above. A detection module detects the traffic sign boards based on their shape. The detection system supports Circle, Triangle and Rectangle Shaped signs. The module sends the detected cutouts to respective classifier modules (circular, Triangular or rectangular) based on shape. These classifiers classify signs, for example a circular speed sign with "50" as "speed limit 50". Thus this classification is done by a sign recognition component which is capable of recognizing the traffic signs that it is already trained with. It internally has different classifiers capable of handling circular shaped, triangular shaped, rectangular shaped signs. However, this classifier is not capable of giving any valid output if it encounters a totally new sign which it is not trained with. This is then however passed to the CNN and RNN (LSTM) network component part of the sign recognition system, that can provide a caption for this unknown traffic sign as described above.

In another exemplary embodiment, a computer program or computer program element is provided that is characterized by being configured to execute the method steps of the method according to one of the preceding embodiments, on an appropriate system.

The computer program element might therefore be stored on a computer unit. This computing unit may be configured to perform or induce performing of the steps of the method described above. Moreover, it may be configured to operate the components of the above described system. The computing unit can be configured to operate automatically and/or to execute the orders of a user. A computer program may be loaded into a working memory of a data processor. The data processor may thus be equipped to carry out the method according to one of the preceding embodiments.

According to a further exemplary embodiment of the present invention, a computer readable medium, such as a CD-ROM, is presented wherein the computer readable medium has a computer program element stored on it which computer program element is described by the preceding section.

It has to be noted that embodiments of the invention are described with reference to different subject matters. In particular, some embodiments are described with reference to method type claims whereas other embodiments are described with reference to the device type claims

In the claims, the word "comprising" does not exclude other elements or steps, and the indefinite article "a" or "an" does not exclude a plurality. A single processor or other unit may fulfill the functions of several items re-cited in the claims.

Any reference signs in the claims should not be construed as limiting the scope.

## Claims

1. An advanced driving assistance system (100) for determining a caption for an unknown traffic sign, comprising:
- at least one camera (110);
- a processing unit (30);
- a detection module;
- a plurality of traffic sign classifiers (120), comprising a circular shape traffic sign classifier, a triangular shape sign classifier and a rectangular shape sign classifier; and
- an output unit (40);
wherein, the at least one camera is configured to acquire a plurality of images and provide the plurality of images to the detection module, and wherein each image comprises image data;
wherein, the detection module is configured to detect a traffic sign in each of the plurality of images based on its shape, wherein the detection module supports the detection of circular, triangular and rectangular shaped signs;
wherein the detection module is configured to send a plurality of sign cutouts of the detected traffic signs to a respective circular shape, triangular shape, or rectangular shape traffic sign classifier based on shape;
wherein, each of the circular shape, triangular shape, and rectangular shape traffic sign classifiers is configured to determine if a traffic sign is known or unknown;
wherein, each of the circular shape, triangular shape, and rectangular shape traffic sign classifiers is configured to classify a known traffic sign with a known caption for a traffic sign for which it has been trained;
wherein, each of the circular shape, triangular shape, and rectangular shape traffic sign classifiers is configured to provide the plurality of image data for the plurality of images relating to the unknown traffic sign to the processing unit;
wherein, the processing unit is configured to implement at least one artificial neural network to process the plurality of image data for the plurality of images relating to the unknown traffic sign to generate an intermediate caption for the unknown traffic sign for each image data of the plurality of image data, and generate a probability score for each image data indicating a likelihood that the intermediate caption for that image data is the correct caption for the unknown traffic sign,
wherein the processing unit is configured to sum together the probability scores that have the same intermediate caption, and determine a final result caption for the unknown traffic sign as the intermediate caption associated with the highest sum of probability scores,
wherein the at least one artificial neural network comprises a convolutional neural network "CNN" and a recurrent neural network "RNN", wherein output from the CNN forms input to the RNN, wherein the RNN is a Long Short Term Memory "LSTM" neural network; and
wherein, the at least one artificial neural network has been trained on the basis of a plurality of sign cutouts and associated captions for a plurality of known traffic signs, wherein the caption for each known traffic sign is known; and wherein training of the at least one artificial neural network comprises a simultaneous optimization step where the weights of the CNN and RNN are adjusted together; and
wherein, the output unit is configured to output the final result caption for the unknown traffic sign.

2. System according to claim 1, wherein after determination of the final result caption for the unknown traffic sign the unknown traffic sign becomes a known traffic sign, and wherein the at least one artificial neural network is further trained comprising utilization of the determined final result caption and the plurality of image data for the previously unknown traffic sign that is now a known traffic sign.

3. A vehicle (200) with an advanced driving assistance system (100) according to any of claims 1-2, wherein the output unit (40) is configured to display the final result caption for the unknown traffic sign on a dashboard display (210) of the vehicle.

4. A method (300) for determining a caption for an unknown traffic sign, comprising:
acquire by a camera a plurality of images, and wherein each image comprises image data;
providing the plurality of images to a detection module;
detecting by the detection module a traffic sign in each of the plurality of images based on its shape, wherein the detection module supports the detection of circular, triangular and rectangular shaped signs;
sending by the detection module a plurality of sign cutouts of the detected traffic signs to a respective circular shape, triangular shape, or rectangular shape traffic sign classifier based on shape, and wherein each of the circular shape, triangular shape, and rectangular shape traffic sign classifiers is configured to determine if a traffic sign is known or unknown;
either classifying by the respective circular shape, triangular shape, or rectangular shape traffic sign classifier to which the plurality of sign cutouts have been sent a known traffic sign with a known caption for a traffic sign for which the respective traffic sign classifier has been trained;
or provide (310) the plurality of image data for the plurality of images relating to the unknown traffic sign to the processing unit;
b) implementing (320) by the processing unit at least one artificial neural network to process the plurality of image data for the plurality of images relating to the unknown traffic sign and generating an intermediate caption for the unknown traffic sign for each image data of the plurality of image data, and generating a probability score for each image data indicating a likelihood that the intermediate caption for that image data is the correct caption for the unknown traffic sign, and summing together by the processing unit the probability scores that have the same intermediate caption, and determining a final result caption for the unknown traffic sign as the intermediate caption associated with the highest sum of probability scores, wherein the at least one artificial neural network comprises a convolutional neural network "CNN" and a recurrent neural network "RNN", wherein output from the CNN forms input to the RNN, wherein the RNN is a Long Short Term Memory "LSTM" neural network; and wherein, the at least one artificial neural network has been trained on the basis of a plurality of sign cutouts and associated captions for a plurality of known traffic signs, wherein the caption for each known traffic sign is known; and wherein training of the at least one artificial neural network comprises a simultaneous optimization step where the weights of the CNN and RNN are adjusted together; and
c) outputting (330) by an output unit the final result caption for the unknown traffic sign.

5. A computer program element for controlling an advanced driving assistance system according to any one of claims 1-2 and/or an advanced driving assistance system along with dashboard display of a vehicle according to claim 3, which when executed by a processor makes said processor to carry out the method of claim 4.

6. Computer readable medium having stored the computer program element according to claim 5.

## Patentansprüche

1. Fortschrittliches Fahrassistenzsystem (100) zum Bestimmen einer Beschriftung für ein unbekanntes Verkehrsschild, aufweisend:
mindestens eine Kamera (110);
eine Verarbeitungseinheit (30);
ein Detektionsmodul;
eine Vielzahl von Verkehrsschildklassifizierern (120), die einen Klassifizierer für kreisförmige Verkehrsschilder, einen Klassifizierer für dreieckige Schilder und
einen Klassifizierer für rechteckige Schilder aufweisen; und
eine Ausgabeeinheit (40);
wobei die mindestens eine Kamera dazu ausgebildet ist, eine Vielzahl von Bildern zu erfassen und die Vielzahl von Bildern dem Detektionsmodul bereitzustellen,
und wobei jedes Bild Bilddaten aufweist;
wobei das Detektionsmodul dazu ausgebildet ist, ein Verkehrsschild in jedem der Vielzahl von Bildern basierend auf seiner Form zu detektieren, wobei das Detektionsmodul die Detektion kreisförmiger, dreieckiger und rechteckiger Schilder unterstützt;
wobei das Detektionsmodul dazu ausgebildet ist, eine Vielzahl von Schilderausschnitten der detektierten Verkehrsschilder zu einem jeweiligen Klassifizierer für kreisförmige, dreieckige oder rechteckige Verkehrsschilder basierend auf der Form zu senden;
wobei jeder der Klassifizierer für kreisförmige, dreieckige und rechteckige Verkehrsschilder dazu ausgebildet ist, zu bestimmen, ob ein Verkehrsschild bekannt oder unbekannt ist;
wobei jeder der Klassifizierer für kreisförmige, dreieckige und rechteckige Verkehrsschilder dazu ausgebildet ist, ein bekanntes Verkehrsschild mit einer bekannten Beschriftung für ein Verkehrsschild, für das er trainiert wurde, zu klassifizieren;
wobei jeder der Klassifizierer für kreisförmige, dreieckige und rechteckige Verkehrsschilder dazu ausgebildet ist, die Vielzahl von Bilddaten für die Vielzahl von Bildern bezüglich des unbekannten Verkehrsschildes an die Verarbeitungseinheit bereitzustellen;
wobei die Verarbeitungseinheit dazu ausgebildet ist, mindestens ein künstliches neuronales Netzwerk zum Verarbeiten der Vielzahl von Bilddaten für die Vielzahl von Bildern bezüglich des unbekannten Verkehrsschildes zu implementieren, um eine Zwischenbeschriftung für das unbekannte Verkehrsschild für alle Bilddaten der Vielzahl von Bilddaten zu erzeugen und eine Wahrscheinlichkeitsbewertung für alle Bilddaten zu erzeugen, die eine Likelihood angibt, dass die Zwischenbeschriftung für diese Bilddaten die korrekte Beschriftung für das unbekannte Verkehrsschild ist,
wobei die Verarbeitungseinheit dazu ausgebildet ist, die
Wahrscheinlichkeitsbewertungen zu summieren, die die gleiche Zwischenbeschriftung aufweisen, und eine Endresultatbeschriftung für das unbekannte Verkehrsschild als die Zwischenbeschriftung, die mit der höchsten Summe von Wahrscheinlichkeitsbewertungen assoziiert ist, zu bestimmen,
wobei das mindestens eine künstliche neuronale Netzwerk ein faltendes neuronales Netzwerk "CNN" und ein rekurrentes neuronales Netzwerk "RNN" aufweist, wobei die Ausgabe vom CNN die Eingabe in das RNN bildet, wobei das RNN ein neuronales Netzwerk mit langem Kurzzeitgedächtnis (Long Short Term Memory) "LSTM" ist; und
wobei das mindestens eine künstliche neuronale Netzwerk auf Basis einer Vielzahl von Schilderausschnitten und assoziierter Beschriftungen für eine Vielzahl bekannter Verkehrsschilder trainiert wurde, wobei die Beschriftung für jedes bekannte Verkehrsschild bekannt ist; und
wobei das Training des mindestens einen künstlichen neuronalen Netzwerks einen simultanen Optimierungsschritt aufweist, bei dem die Gewichte des CNN und des RNN zusammen angepasst werden; und
wobei die Ausgabeeinheit dazu ausgebildet ist, die Endresultatbeschriftung für das unbekannte Verkehrsschild auszugeben.

2. System nach Anspruch 1, wobei, nach der Bestimmung der Endresultatbeschriftung für das unbekannte Verkehrsschild, das unbekannte Verkehrsschild ein bekanntes Verkehrsschild wird, und wobei das mindestens eine künstliche neuronale Netzwerk ferner unter Verwendung der bestimmten Endresultatbeschriftung und der Vielzahl von Bilddaten für das zuvor unbekannte Verkehrsschild, das nun ein bekanntes Verkehrsschild ist, trainiert wird.

3. Fahrzeug (200) mit einem fortschrittlichen Fahrassistenzsystem (100) nach einem der Ansprüche 1-2, wobei die Ausgabeeinheit (40) dazu ausgebildet ist, die Endresultatbeschriftung für das unbekannte Verkehrsschild auf einer Armaturenbrettanzeigevorrichtung (210) des Fahrzeugs anzuzeigen.

4. Verfahren (300) zum Bestimmen einer Beschriftung für ein unbekanntes Verkehrsschild, aufweisend:
Erfassen, durch eine Kamera, einer Vielzahl von Bildern, und wobei jedes Bild Bilddaten aufweist;
Bereitstellen der Vielzahl von Bildern an ein Detektionsmodul;
Detektieren, durch das Detektionsmodul, eines Verkehrsschildes in jedem der Vielzahl von Bildern basierend auf seiner Form, wobei das Detektionsmodul die Detektion kreisförmiger, dreieckiger und rechteckiger Schilder unterstützt;
Senden, durch das Detektionsmodul, einer Vielzahl von Schilderausschnitten der detektierten Verkehrsschilder zu einem jeweiligen Klassifizierer für kreisförmige, dreieckige oder rechteckige Verkehrsschilder basierend auf der Form, und wobei jeder der Klassifizierer für kreisförmige, dreieckige und rechteckige Verkehrsschilder dazu ausgebildet ist, zu bestimmen, ob ein Verkehrsschild bekannt oder unbekannt ist;
entweder Klassifizieren, durch den jeweiligen Klassifizierer für kreisförmige, dreieckige oder rechteckige Verkehrsschilder, zu dem die Vielzahl von Schilderausschnitten gesendet wurde, eines bekannten Verkehrsschildes mit einer bekannten Beschriftung für ein Verkehrsschild, für das der jeweilige Verkehrsschildklassifizierer trainiert wurde;
oder Bereitstellen (310) der Vielzahl von Bilddaten für die Vielzahl von Bildern bezüglich des unbekannten Verkehrsschildes an die Verarbeitungseinheit;
b) Implementieren (320), durch die Verarbeitungseinheit, mindestens eines künstlichen neuronalen Netzwerks zum Verarbeiten der Vielzahl von Bilddaten für die Vielzahl von Bildern bezüglich des unbekannten Verkehrsschildes und Erzeugen einer Zwischenbeschriftung für das unbekannte Verkehrsschild für alle Bilddaten der Vielzahl von Bilddaten, und Erzeugen einer Wahrscheinlichkeitsbewertung für alle Bilddaten, die eine Likelihood angibt, dass die Zwischenbeschriftung für diese Bilddaten die korrekte Beschriftung für das unbekannte Verkehrsschild ist, und Summieren, durch die Verarbeitungseinheit, der Wahrscheinlichkeitsbewertungen, die die gleiche Zwischenbeschriftung aufweisen, und Bestimmen einer Endresultatbeschriftung für das unbekannte Verkehrsschild als die Zwischenbeschriftung, die mit der höchsten Summe von Wahrscheinlichkeitsbewertungen assoziiert ist, wobei das mindestens eine künstliche neuronale Netzwerk ein faltendes neuronales Netzwerk "CNN" und ein rekurrentes neuronales Netzwerk "RNN" aufweist, wobei die Ausgabe vom CNN die Eingabe in das RNN bildet, wobei das RNN ein neuronales Netzwerk mit langem Kurzzeitgedächtnis (Long Short Term Memory) "LSTM" ist; und wobei das mindestens eine künstliche neuronale Netzwerk auf Basis einer Vielzahl von Schilderausschnitten und assoziierter Beschriftungen für eine Vielzahl bekannter Verkehrsschilder trainiert wurde, wobei die Beschriftung für jedes bekannte Verkehrsschild bekannt ist; und wobei das Training des mindestens einen künstlichen neuronalen Netzwerks einen simultanen Optimierungsschritt aufweist, bei dem die Gewichte des CNN und des RNN zusammen angepasst werden; und
c) Ausgeben (330), durch eine Ausgabeeinheit, der Endresultatbeschriftung für das unbekannte Verkehrsschild.

5. Computerprogrammelement zum Steuern eines fortschrittlichen Fahrassistenzsystems nach einem der Ansprüche 1-2 und/oder eines fortschrittlichen Fahrassistenzsystems zusammen mit einer Armaturenbrettanzeigevorrichtung eines Fahrzeugs nach Anspruch 3, das bei Ausführung durch einen Prozessor veranlasst, dass der Prozessor das Verfahren nach Anspruch 4 ausführt.

6. Computerlesbares Medium, auf dem das Computerprogrammelement nach Anspruch 5 gespeichert ist.

## Revendications

1. Système avancé d'aide à la conduite (100) pour déterminer une légende pour un panneau de signalisation inconnu, le système comprenant :
- au moins une caméra (110) ;
- une unité de traitement (30) ;
- un module de détection ;
- une pluralité de classificateurs de panneaux de signalisation (120), comprenant un classificateur de panneaux de signalisation de forme circulaire, un
classificateur de panneaux de forme triangulaire et un classificateur de panneaux de forme rectangulaire ; et
- une unité de sortie (40) ;
où l'au moins une caméra est configurée pour acquérir une pluralité d'images et fournir la pluralité d'images au module de détection, et où chaque image comprend des données d'image ;
où le module de détection est configuré pour détecter un panneau de signalisation dans chacune de la pluralité d'images en fonction de sa forme, où le module de détection prend en charge la détection des panneaux de signalisation de forme circulaire, triangulaire et rectangulaire ;
où le module de détection est configuré pour envoyer une pluralité de coupes de panneaux des panneaux de signalisation détectés à un classificateur de panneaux de signalisation de forme respective circulaire, triangulaire ou rectangulaire en fonction de leur forme ;
où chacun des classificateurs de panneaux de signalisation de forme circulaire, triangulaire ou rectangulaire est configuré pour déterminer si un panneau de signalisation est connu ou inconnu ;
où chacun des classificateurs de panneaux de signalisation de forme circulaire, triangulaire et rectangulaire est configuré pour classer un panneau de signalisation connu avec une légende connue pour un panneau de signalisation pour lequel il a fait l'objet d'un apprentissage ;
où, chacun des classificateurs de panneaux de signalisation de forme circulaire, triangulaire et rectangulaire est configuré pour fournir à l'unité de traitement la pluralité de données d'image pour la pluralité d'images relatives au panneau de signalisation inconnu ;
où l'unité de traitement est configurée pour mettre en oeuvre au moins un réseau neuronal artificiel afin de traiter la pluralité de données d'image pour la pluralité d'images relatives au panneau de signalisation inconnu afin de générer une légende intermédiaire pour le panneau de signalisation inconnu pour chacune des données d'image de la pluralité de données d'image, et de générer un score de probabilité pour chaque donnée d'image indiquant la probabilité que la légende intermédiaire pour cette donnée d'image soit la légende correcte pour le panneau de signalisation inconnu,
où l'unité de traitement est configurée pour additionner les scores de probabilité qui ont la même légende intermédiaire et déterminer une légende de résultat finale pour le panneau de signalisation inconnu comme étant la légende intermédiaire associée à la somme la plus élevée des scores de probabilité,
où l'au moins un réseau neuronal artificiel comprend un réseau neuronal convolutif « CNN » et un réseau neuronal récurrent « RNN », où la sortie du CNN constitue l'entrée du RNN, où le RNN est un réseau neuronal à mémoire à long terme et à court terme « LSTM » ; et
où l'au moins un réseau neuronal artificiel a été entraîné sur la base d'une pluralité de coupes de panneaux des panneaux et des légendes associées pour une pluralité de panneaux de signalisation connus, où la légende de chaque panneau de signalisation connu est connue ; et
où l'entraînement de l'au moins un réseau neuronal artificiel comprend une étape d'optimisation simultanée au cours de laquelle les poids du CNN et du RNN sont ajustés ensemble ; et
où l'unité de sortie est configurée pour délivrer en sortie la légende de résultat finale pour le panneau de signalisation inconnu.

2. Système selon la revendication 1, dans lequel, après la détermination de la légende de résultat finale pour le panneau de signalisation inconnu, le panneau de signalisation inconnu devient un panneau de signalisation connu, et où l'au moins un réseau neuronal artificiel est en outre entraîné en utilisant la légende de résultat finale déterminée et la pluralité de données d'image pour le panneau de signalisation précédemment inconnu qui est maintenant un panneau de signalisation connu.

3. Véhicule (200) équipé d'un système avancé d'aide à la conduite (100) selon l'une quelconque des revendications 1 et 2, où l'unité de sortie (40) est configurée pour afficher la légende de résultat finale pour le panneau de signalisation inconnu sur un écran du tableau de bord (210) du véhicule.

4. Procédé (300) pour déterminer une légende pour un panneau de signalisation inconnu, le procédé comprenant les étapes suivantes :
acquérir, par une caméra, une pluralité d'images, où chaque image comprend des données d'image ;
fournir la pluralité d'images à un module de détection ;
détecter, par le module de détection, un panneau de signalisation dans chacune de la pluralité d'images en fonction de sa forme, où le module de détection prend en charge la détection des panneaux de forme circulaire, triangulaire et rectangulaire ;
envoyer, par le module de détection, une pluralité de coupes de panneaux des panneaux de signalisation détectés à un classificateur de panneaux de signalisation de forme respective circulaire, triangulaire ou rectangulaire en fonction de leur forme, et où chacun des classificateurs de panneaux de signalisation de forme circulaire, triangulaire et rectangulaire est configuré pour déterminer si un panneau de signalisation est connu ou inconnu ;
soit classer, par le classificateur de panneaux de signalisation de forme respective circulaire, triangulaire ou rectangulaire auquel la pluralité de coupes de panneaux a été envoyée, un panneau de signalisation connu avec une légende connue pour un panneau de signalisation pour lequel le classificateur de panneaux de signalisation respectif a fait l'objet d'un apprentissage ;
soit fournir (310) à l'unité de traitement la pluralité de données d'image pour la pluralité d'images relatives au panneau de signalisation inconnu ;
b) mettre en oeuvre (320), par l'unité de traitement, au moins un réseau neuronal artificiel pour traiter la pluralité de données d'image pour la pluralité d'images relatives au panneau de signalisation inconnu, et générer une légende intermédiaire pour le panneau de signalisation inconnu pour chaque donnée d'image de la pluralité de données d'image, et générer un score de probabilité pour chaque donnée d'image indiquant la probabilité que la légende intermédiaire pour cette donnée d'image soit la légende correcte pour le panneau de signalisation inconnu, et additionner ensemble, par l'unité de traitement, les scores de probabilité qui ont la même légende intermédiaire, et déterminer une légende de résultat finale pour le panneau de signalisation inconnu comme étant la légende intermédiaire associée à la somme la plus élevée des scores de probabilité, où l'au moins un réseau neuronal artificiel comprend un réseau neuronal convolutif « CNN » et un réseau neuronal récurrent « RNN », où la sortie du CNN constitue l'entrée du RNN, où le RNN est un réseau neuronal à mémoire à long terme et à court terme « LSTM » ; et
où l'au moins un réseau neuronal artificiel a été entraîné sur la base d'une pluralité de coupes de panneaux et des légendes associées pour une pluralité de panneaux de signalisation connus, où la légende de chaque panneau de signalisation connu est connue ; et où l'entraînement de l'au moins un réseau neuronal artificiel comprend une étape d'optimisation simultanée au cours de laquelle les poids du CNN et du RNN sont ajustés ensemble ; et
c) délivrer en sortie (330), par une unité de sortie, la légende de résultat finale pour le panneau de signalisation inconnu.

5. Élément de programme d'ordinateur pour contrôler un système avancé d'aide à la conduite selon l'une quelconque des revendications 1 et 2 et/ou un système avancé d'aide à la conduite avec un écran d'affichage du tableau de bord d'un véhicule selon la revendication 3 qui, lorsqu'il est exécuté par un processeur, permet audit processeur de mettre en oeuvre le procédé de la revendication 4.

6. Support lisible par ordinateur sur lequel est stocké l'élément de programme d'ordinateur selon la revendication 5.
